# EUROPEAN PATENT APPLICATION

(11) **EP 2 219 359 A1**
(43) Date of publication of application: **18.08.2010**
(21) Application number: 10151756.3
(22) Date of filing: 27.01.2010
(51) Int. Cl.: H04M 15/00, H04M 17/00, H04L 12/14

(54) **Seamless switching between pre-paid and post-paid charging**

(30) Priority: 11.02.2009 CN 200910077687
(71) Applicant: Huawei Technologies Co., Ltd., Longgang District, Shenzhen Guangdong 518129 (CN)
(72) Inventor: Zhu, Jian, 518129, Shenzhen (CN)
(74) Representative: Thun, Clemens

(57) **Abstract**

The application relates to charging of telecommunication services. Prior art charging methods suffer from the problem that during the switching from prepaid to postpaid charging, the service has to be cut off because there is substantially no information sharing between the prepaid and postpaid charging systems. The problem is overcome, i.e. seamless switching between prepaid and postpaid charging is achieved in that information relating to the switching time point and/or the time spans before and after switching are recorded and shared between the two charging systems. In particular, said information is sent to the postpaid charging system to facilitate said system to charge according to the service time span of the postpaid charging portion. By recording the switching information of the charging modes, the device and system make possible simultaneous realizations of the pre-paid charging mode and the post-paid charging mode during the process of the service, solve the problem of otherwise having to cut off the service during switching between charging modes, achieve seamless switching between the pre-paid charging mode and the post-paid charging mode without having to cut off the service, and enhance the level of user experience.

## Description

### Field of Technology

The present invention relates to the technical field of communications, and particularly to a charging method, a charging device, and a charging system.

### Background of the Invention

In practical operations of session-based communications services, pre-paid services and post-paid services correspond to online charging and offline charging. In other words, pre-paid services are charged online while post-paid services are charged offline.

In the state of the art, methods of online charging and offline charging are carried out by different systems respectively. For instance, method of online charging is carried out by such systems having online charging functions as the Intelligent Network Charging System and the Online Charging System (OCS), and method of offline charging is carried out by such systems having offline charging functions as the Business and Operation Support System (BOSS) Charging System. The charging system having online charging functions is independent of the charging system having offline charging functions. For instance, with respect to the hybrid charging service, when the subscriber uses the pre-paid charging account, the service will be cut off in the circumstances the pre-paid charging account of the subscriber is used up or the time period changes, and the subscriber reinitiates a service request to continue the service by using the post-paid charging account. The circumstance in which the service is cut off due to change in the time period is for instance using the post-paid charging mode during work time and using the pre-paid charging mode during off-duty time.

In order to compensate for the defects of the above two charging systems, another charging method employs the Convergent Billing System (CBS), i.e. the above two independent charging systems are integrated. This method is suitable for newly constructed charging systems.

Use of the convergent billing system requires a complicated process of docketing and a series of corollary schemes. To service operators already in possession of independent pre-paid charging and post-paid charging modules, it runs a great risk in terms of cost, program progress, and user experience by having to reform the independent charging system or replacing the independent charging system with the convergent billing system. Moreover, the convergent billing technology is risky in itself. Furthermore, in the method whereby pre-paid charging is completely separated from post-paid charging, there is substantially no information sharing between the two charging systems, so that the service must be cut off when no balance is left in the pre-paid charging account, and this greatly reduces the processing efficiency of the service. Accordingly, there is currently an urgent need to solve the problem of having to cut off the service during the process of switching between charging modes.

### Summary of the Invention

Embodiments of the present invention provide a charging method, a charging device and a charging system, so as to solve the problem of having to cut off the service during the process of switching between charging modes.

A first aspect of the present invention provides a charging method, which comprises the steps of switching between charging modes in accordance with a charging switching rule when a service is in progress, and recording switching information; and sending the switching information to facilitate a post-paid charging module to charge a post-paid charging portion of the service in a post-paid charging mode in accordance with the switching information.

A second aspect of the present invention provides a charging device, which comprises a switching unit, for switching between charging modes in accordance with a charging switching rule when a service is in progress; a recording unit, for recording switching information; and a sending unit, for sending the switching information to facilitate a post-paid charging module to charge a post-paid charging portion of the service in a post-paid charging mode in accordance with the switching information.

A third aspect of the present invention provides a charging device, which comprises a receiving module, for receiving a telephone bill including switching information; and a charging module, for charging a post-paid charging portion of a service in a post-paid charging mode in accordance with the switching information.

A fourth aspect of the present invention provides a session control device, which comprises a receiving module, for receiving switching information; a generating module, for generating a telephone bill including the switching information; and a sending module, for sending the telephone bill to facilitate a post-paid charging module to charge a post-paid charging portion of a service in a post-paid charging mode in accordance with the switching information.

A fifth aspect of the present invention provides a charging system, which comprises a pre-paid charging module, for switching between charging modes in accordance with a charging switching rule when a service is in progress, recording switching information, generating a telephone bill including the switching information, and sending the telephone bill to a post-paid charging module; and the post-paid charging module, for charging a post-paid charging portion of the service in a post-paid charging mode in accordance with the switching information in the telephone bill.

A sixth aspect of the present invention provides a charging system, which comprises a pre-paid charging module, for switching between charging modes in accordance with a charging switching rule when a service is in progress, and recording and sending switching information; a session control module, for generating a telephone bill including the switching information, and sending the telephone bill to a post-paid charging module; and the post-paid charging module, for charging a post-paid charging portion of the service in a post-paid charging mode in accordance with the switching information in the telephone bill.

By recording the switching information of the charging modes, the aforementioned embodiments make possible simultaneous realizations of the pre-paid charging mode and the post-paid charging mode during the process of a session, solve the problem of otherwise having to cut off the service during switching between charging modes, achieve the technical effect of performing both the pre-paid charging mode and the post-paid charging mode without having to cut off the service, namely seamless switching, and enhance the level of user experience.

The technical solutions of the present invention are described in further detail below with reference to the accompanying drawings and specific embodiments.

### Brief Description of the Drawings

Fig. 1A is a structural schematic view illustrating a charging device according to a first embodiment of the present invention;
Fig. 1B is a structural schematic view illustrating a charging device according to a second embodiment of the present invention;
Fig. 2 is a structural schematic view illustrating a charging device according to another embodiment of the present invention;
Fig. 3 is a structural schematic view illustrating a session control device according to an embodiment of the present invention;
Fig. 4 is a structural schematic view illustrating a charging system according to Embodiment 1 of the present invention;
Fig. 5 is a structural schematic view illustrating a charging system according to Embodiment 2 of the present invention;
Fig. 6 is a flowchart illustrating a charging method according to an embodiment of the present invention; and
Fig. 7 is a schematic view illustrating a flow for singly sending down of signaling in a charging method according to an embodiment of the present invention.

### Detailed Description of the Embodiments

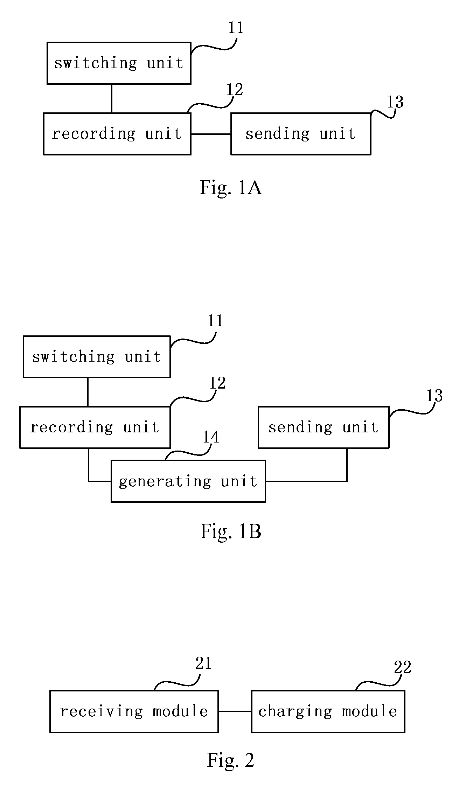

Fig. 1A is a structural schematic view illustrating a charging device according to a first embodiment of the present invention. The charging device in this embodiment is a pre-paid charging device, and comprises a switching unit 11, a recording unit 12 and a sending unit 13. The switching unit 11 switches between charging modes in accordance with a charging switching rule when the service is in progress. For example, the service can be a session-based service, and there can be many charging rules during the process of session, whereby the current charging mode can be switched to another charging mode when the balance of the pre-paid charging account of the subscriber of the service is insufficient, or when the service has progressed to a certain time point. In an example, suppose the switching rule demands that the time period from 8:30 to 17:30 be for the post-paid charging mode, and that the rest of the time be for the pre-paid charging mode. If a session begins from 8:00 to continue till 8:50, the switching unit 11 will switch the pre-paid charging mode to the post-paid charging mode at 8:30; and if a session begins from 16:50 to continue till 17:50, the switching unit 11 will switch the charging mode from the post-paid charging mode to the pre-paid charging mode at 17:30. The recording unit 12 records the switching information. The "switching information" mentioned in the embodiments of the present invention may include one or more of the following options of information: switching time point, service time span before switching, and service time span after switching. The sending unit 13 sends the switching information to facilitate a post-paid charging module to charge the post-paid charging portion of the service in a post-paid charging mode in accordance with the switching information.

The sending unit 13 can be specifically configured for sending the switching information to a session control module via Furnish Charging Information (FCI) signaling to let the session control module output a telephone bill to the post-paid charging module in accordance with the switching information, so as to facilitate the post-paid charging module to charge the post-paid charging portion of the service in the post-paid charging mode in accordance with the switching information in the telephone bill.

Fig. 1B is a structural schematic view illustrating a charging device according to a second embodiment of the present invention. As shown in Fig. 1B, the charging device can further comprise a generating unit 14 for generating a telephone bill including switching information, and the sending unit 13 can be specifically configured for directly sending the telephone bill to the post-paid charging module, so as to facilitate the post-paid charging module to charge the post-paid charging portion of the service in the post-paid charging mode in accordance with the switching information in the telephone bill. In practice,,the post-paid charging module can either charge according to the service time span of the post-paid charging portion or according to the service traffic within the service time length.

In this embodiment the pre-paid charging device records session information during the process of session via the recording unit 12, and this avoids cut-off of the service due to change in the charging modes, achieves seamless switching between the pre-paid charging mode and the post-paid charging mode, and enhances user experience.

According to another embodiment of the present invention a post-paid charging device is offered. As shown in Fig. 2, the post-paid charging device comprises a receiving module 21 and a charging module 22. The receiving module 21 receives a telephone bill including switching information, and the charging module 22 charges the post-paid charging portion of the service in the post-paid charging mode in accordance with the switching information. Specifically, the service time span of the post-paid charging portion is determined by using the switching information and the total service time span, and this portion of the service is charged accordingly.

The telephone bill that includes the switching information can be directly outputted from a pre-paid charging device to the post-paid charging device. It is also possible for the pre-paid charging device to send the switching information to a session control module, wherein the session control module generates the telephone bill by using the switching information and sends the telephone bill to the post-paid charging device.

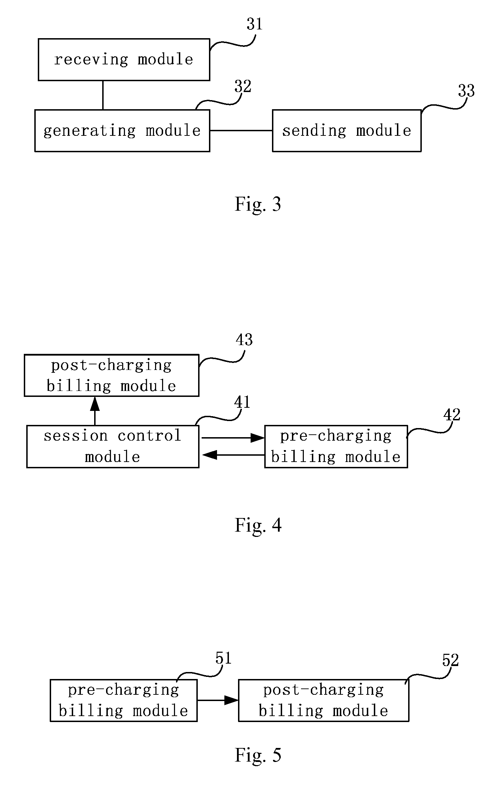

As shown in Fig. 3, a session control device according to an embodiment of the present invention comprises a receiving module 31, a generating module 32 and a sending module 33. The receiving module 31 receives switching information sent from a pre-paid charging device, the generating module 32 generates a telephone bill including the received switching information, and the sending module 33 sends the generated telephone bill to the post-paid charging device, so as to facilitate the post-paid charging device to charge for the session time span of the post-paid charging portion.

Fig. 4 is a structural schematic view illustrating a charging system according to an embodiment of the present invention. The charging system comprises a session control module 41, a pre-paid charging module 42 and a post-paid charging module 43. The pre-paid charging module 42 can be the pre-paid charging device provided by the above embodiments, and the post-paid charging module 43 can be the post-paid charging device provided by the above embodiments. In this embodiment the post-paid charging module 43 is connected to the session control module 41 to let the session control module 41 output the telephone bill to the post-paid charging module 43. Upon receipt of a request for a service, the session control module 41 sends a charging request to the pre-paid charging module 42, and a service control response is returned. Upon receipt of the charging request, the pre-paid charging module 42 switches the charging mode in accordance with a charging switching rule, and records the switching information. In practice, switching can be carried out in accordance with a predetermined time point. For instance, it can be preset that the work time from 8:00 to 18:00 is for the pre-paid charging mode, and the rest of the time is for the post-paid charging mode. Alternatively, it can be preset to switch to the post-paid charging mode when the balance in the pre-paid charging account is insufficient, wherein insufficient balance includes the two circumstances in which the balance is zero and the balance is not zero. When session finishes, the pre-paid charging module 42 sends the recorded switching information to the session control module 41 in the form of a charging response, to let the session control module 41 generate the telephone bill and send the telephone bill to the post-paid charging module 43. In this embodiment the charging system records the switching information via the pre-paid charging module, and provides the switching information to the post-paid charging module via the session control module, and the post-paid charging module charges the post-paid charging portion of the current service in the post-paid charging mode, thereby preventing the service from being cut off due to change in the charging modes, and guaranteeing normal operation of the service in spite of change in the charging modes.

Fig. 5 is a structural schematic view illustrating a charging system according to an embodiment of the present invention. The charging system comprises a pre-paid charging module 51 and a post-paid charging module 52. This embodiment differs from the above mentioned embodiment in the fact that the post-paid charging module 52 is connected to the pre-paid charging module 51, whereby the pre-paid charging module 51 generates the telephone bill in accordance with the recorded switching information and directly outputs the bill to the post-paid charging module 52. Suppose it is preset that the time period from 8:00 to 20:00 in a day be for the pre-paid charging mode, and the rest of the time in the day be for the post-paid charging mode: if a subscriber initiates a call at 7:50, the pre-paid charging module 51 begins to count (or record) the time in accordance with a charging request from a session control module, and deducts fee from an account of the subscriber from 8:00 onwards, namely the post-paid charging mode is switched to the pre-paid charging mode. When session finishes, the pre-paid charging module 51 directly generates the telephone bill in accordance with the switching information, and sends the telephone bill including the switching information to the post-paid charging module 52, so as to facilitate the post-paid charging module 52 to charge in accordance with the switching information in the telephone bill. Like the case in the above embodiment, the post-paid charging module 52 charges for the session before switching.

In this embodiment the charging system records the switching information via the pre-paid charging module 51, and directly sends the switching information to the post-paid charging module 52 via the pre-paid charging module 51, and the post-paid charging module 52 charges the post-paid charging portion of the current service in the post-paid charging mode, thereby preventing the service from being cut off due to change in the charging modes, and guaranteeing normal operation of the session service in spite of change in the charging modes.

In the above embodiment for the system, each of the session control module, the pre-paid charging module and the post-paid charging module can be deployed as an independent subsystem, and it is also possible to deploy several of them as a single subsystem. Of these, the session control module can be an independent Service Switch Point (SSP)/Mobile Switching Center (MSC), the pre-paid charging module can be an Independent Intelligent Network Charging system or an OCS charging system, and the post-paid charging module can be an independent post-paid charging BOSS charging system.

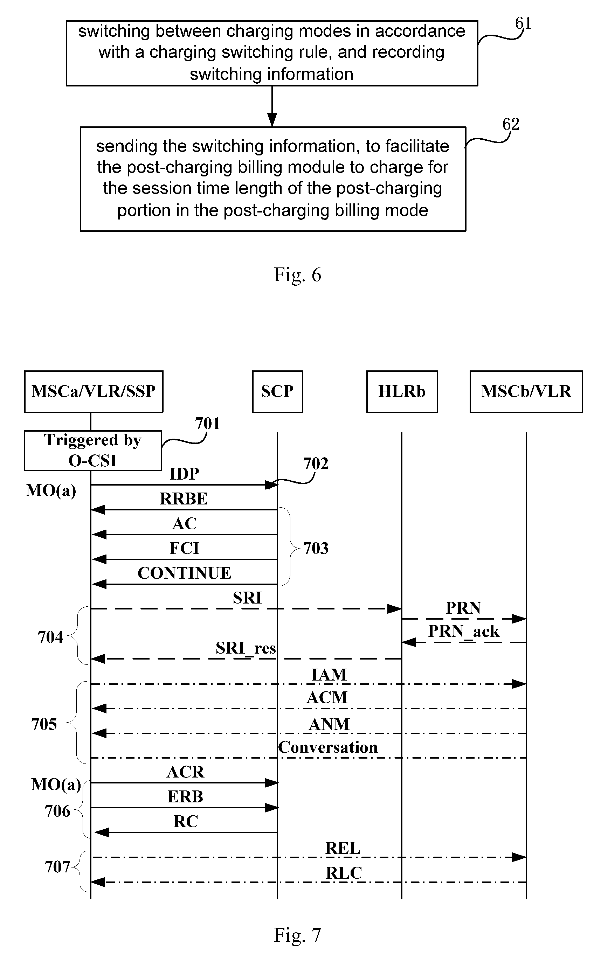

Fig. 6 is a flowchart illustrating the charging method according to an embodiment of the present invention. The charging method in this embodiment enables realization of the above charging system. The charging process comprises the following steps:
Step 61: Switching between charging modes is performed in accordance with a charging switching rule when a service is in progress, and the switching information is recorded. The switching information may include one or more of the following options of information: switching time point, service time span before switching, and service time span after switching. For instance, if the switching rule is that based on whether the balance in the pre-paid charging account satisfies the requirement of the service, switching one charging mode to another charging mode, e.g. when the balance of the pre-paid charging account is insufficient, the pre-paid charging mode is switched to the post-paid charging mode, and the session time span after switching is recorded.
Step 62: The switching information is sent to facilitate the post-paid charging module to charge for the session time span of the post-paid charging portion in the post-paid charging mode. For instance, if the switching information as sent is the session time span after switching in Step 61, the post-paid charging module charges the service incurred in the post-paid charging portion in accordance with the session time span after switching.

In the above Step 62, the switching information such as the switching time point and the session time spans before and after switching can be sent via a session control module to the post-paid charging module in the form of a telephone bill, and can also be directly sent by the pre-paid charging module to the post-paid charging module in the form of the telephone bill.

An exemplary flow of the above embodiment of the method, which is employed by the above embodiment of the system may comprise:
- A subscriber initiates a request for use of a service, which is triggered according to timing or according to events;
- Upon receipt of the request for use of the service as initiated by the subscriber, a session control module 41 initializes a session to be used by the service. Specifically, if No. 7 signaling is based on, session control is generally established at a switching device such as MSC, with regard to the Code Division Multiple Access (CDMA) network, the global system for mobile communications (GSM) network, and the fixed network (F network);
- The session control module 41 triggers an authenticating and charging request to a pre-paid charging module 42. For an intelligent network, the triggering can be carried out in accordance with the Originating CAMEL Subscription Information (O-CSI) or Terminating CAMEL Subscription Information (T-CSI) or the access code of the subscriber;
- The pre-paid charging module 42 monitors service charging in real time, and identifies time points at which the pre-paid charging mode and the post-paid charging mode is switched to each other according to the switching rule during the process of charging;
- If service control is carried out between the session control module 41 and the pre-paid charging module 42 on the basis of the CAMEL Application Part (CAP) protocol of Customized Applications for Mobile Network Enhanced Logic (CAMEL) with the typical networking such as MSC/SSP<--->Service Control Point (SCP), the pre-paid charging module 42 uses the "Free Format Data" or "Append Free Format Data" parameter in the "FCI/FCI_GPRS" signaling to carry therewith the switching information relating to a switching between the pre-paid charging account and the post-paid charging account and/or a switching between pre-paid charging mode and the post-paid charging mode, and send the switching information carried down to the session control module 41. The switching information includes but not limited to, pre-charged call time span and switching time point etc. Specifically, the "FCI/FCI_GPRS" signaling is Furnish Charging Information (FCI) for voices and is the FCI_General Packet Radio Service (FCI_GPRS) for GPRS services. See the description in the standards of "3GPP 23078" for details of the "FCI/FCI_GPRS" signaling. The FCI signaling can be sent down in one or more times for actual service charging scenarios.

A schematic flow chart for singly sending down the signaling is as shown in Fig. 7. It is generally required in this embodiment that FCI be sent down once again after Event Report Basic Call State Model (ERB) and before Release Call (RC). The flow for singly sending down the FCI signaling comprises the following steps:
Step 701: When a pre-paid calling subscriber is in the coverage of the MSCa/Visiting Location Register (VLR)/Service Switching Point (SSP), the service is triggered by O-CSI.
Step 702: The MSCa/VLR/SSP receives a call, and O-CSI triggers the service in accordance with the calling subscription information by directly placing the long-distance district number of the location in which MSCa/VLR/SSP resides in a Location Number parameter of an Initial Detect Point (IDP) message, and sends the IDP message to a SCP.
Step 703: Upon receipt of the IDP message, the SCP firstly analyzes the account of the calling subscriber. If the account is valid, the call rate of the caller is determined in accordance with the long-distance district number of the location visited by the calling subscriber (the Location Number parameter in the IDP message) and the long-distance district number of the called subscriber, the balance is converted into conversation time span, and such messages as request report Basic Call State Model (BCSM) event (BCSM Event, RRBE), Apply Charging (AC), Furnish Charging Information (FCI) and CONTINUE message etc. are sent to the MSCa/VLR/SSP, wherein the FCI carries therewith an intelligent calling indication.
Step 704: The MSCa/VLR/SSP sends a Send Route Info (SRI) of Mobile Application Part (MAP) signaling to the Home Location Register (HLR) HLRb of the called party in accordance with the called number in the Telephone User Part (TUP) message, and queries about the roaming number of the called party; the HLRb sends a Provide Roaming Number (PRN) to the switch MSCb in which the called party locates to obtain the roaming number information in accordance with the current location registered by the called party; MSCb feeds the roaming location number back to HLRb through a response message PRN_ACK of PRN, and HLRb feeds the roaming number of the called party back to MSCa through a response message SRI_res.
Step 705: The MSCa/VLR/SSP sends an Initial Address Message (IAM) of the TUP signaling to the switch MSCb in which the called party locates in accordance with the roaming location information (the roaming number) to perform the call connection, and the MSCb/VLR of the called party completes the response by responding an Address Complete Message (ACM) and an Answer Message (ANM) to establish conversation.
Step 706: The conversation completes and the caller hangs up; the MSCa/VLR/SSP reports an Apply Charging Report (ACR) and an Event Report BCSM (ERB) to the SCP. The ERB is used to report the hang-up event. Upon completion of charging, the SCP sends a Release Call (RC) down to the MSCa/VLR/SSP to indicate to release the call connection. Sometimes, before sending down the RC, an FCI can be sent down, carrying therewith the charging result to instruct the MSCa/VLR/SSP to record the contents of FCI in the telephone bill.
Step 707: The MSCa/VLR/SSP sends a TUP signaling RELease (REL) to the switch MSCb of the called party is located. The MSCb completes the release process through a Release Complete (RLC) message response.

In the figure 7, the arrow in solid line indicates the CAP signaling, the arrow in dotted line indicates the MAP signaling, and the arrow in dash-and-dot line indicates the Integrated Services Digital Network (ISDN) User Part (ISUP) signaling.

If the session control module 41 and the pre-paid charging module 42 are based on the Diameter protocol with the typical networking such as Gateway GPRS Support Node (GGSN)<--->OCS, the relevant information can be returned through the associated parameter of "Diameter", and the session control module 41 records the information relevant to the switching between pre-paid charging and post-paid charging in the telephone bill.

Finally, the post-paid charging module 43 processes to carry out pricing and charging of the post-paid charging portion in accordance with the switching information in the telephone bill and the total time span of service use. Accordingly, seamless switching between the pre-paid charging and post-paid charging accounts is realized during use of the service by the subscriber.

The charging process whereby the charging system in another embodiment of the system employs the above embodiment for the method differs from the mentioned embodiment of the system in that the telephone bill including the switching information is generated by the pre-paid charging module, and it suffices at this time for the pre-paid charging module to directly record switching information about the switching between the pre-paid charging mode and the post-paid charging mode in the telephone bill.

By recording the switching information, the above embodiments for the method makes possible simultaneous realizations of the pre-paid charging mode and the post-paid charging mode during the process of a session, achieves the technical effect of performing both the pre-paid charging mode and the post-paid charging mode without having to cut off the service, namely seamless switching, and enhances the level of user experience.

As comprehensible to persons ordinarily skilled in the art, the entire or partial steps in the methods of the aforementioned embodiments can be carried out by a program instructing the relevant hardware. The program can be stored in a computer-readable storage medium, and when executed, the program performs the steps included in the methods of the aforementioned embodiments. The storage medium includes such various media as an ROM, an RAM, a magnetic disk, or an optical disk, etc. capable of storing program codes.

As should be finally noted, the above embodiments are used merely to explain, rather than to restrict, the technical solutions of the present invention. Although the present invention is explained in detail with reference to the above embodiments, it should be nonetheless understood to persons ordinarily skilled in the art that it is still possible to make modifications to the technical solutions as recorded in the above embodiments or to equivalently substitute partial technical features thereof.

## Claims

1. A charging method, comprising:
switching between charging modes in accordance with a charging switching rule when a service is in progress, and recording switching information about the switching; and
sending the switching information to facilitate a post-paid charging module to charge a post-paid charging portion of the service in a post-paid charging mode in accordance with the switching information.

2. The charging method according to claim 1, wherein the step of recording switching information includes recording one or any combination of a switching time point, a service time span before switching and a service time span after switching.

3. The charging method according to claim 2, wherein the step of switching between charging modes in accordance with a charging switching rule includes: switching one charging mode to another charging mode when balance in a pre-paid charging account of a subscriber of the service is insufficient, or when the service has progressed to a predetermined time point.

4. The charging method according to any one of claims 1 to 3, **characterized in that** the step of sending the switching information includes:
sending the switching information to a session control module, so that the session control module generates a telephone bill including the switching information and sends the telephone bill to the post-paid charging module; or
generating a telephone bill including the switching information, and sending the telephone bill to the post-paid charging module.

5. A charging device, comprising:
a switching unit (11), configured for switching between charging modes in accordance with a charging switching rule when a service is in progress;
a recording unit (12), configured for recording switching information about the switching in the switching unit; and
a sending unit (13), configured for sending the switching information recorded in the recording unit to facilitate a post-paid charging module to charge a post-paid charging portion of the service in a post-paid charging mode in accordance with the switching information.

6. The charging device according to claim 5, wherein the switching unit (11) is specifically configured for switching one charging mode to another charging mode when balance in a pre-paid charging account of a subscriber of the service is insufficient, or when the service has progressed to a predetermined time point.

7. The charging device according to claim 5, wherein the recording unit (12) is specifically configured for recording one or any combination of a switching time point, a service time span before switching, and a service time span after switching.

8. The charging device according to any one of claims 5 to 7, wherein the sending unit (13) is specifically configured for sending the switching information to a session control module (41), so that the session control module (41) generates a telephone bill including the switching information and sends the telephone bill to the post-paid charging module (43); or
the charging device further comprises a generating unit (14) for generating a telephone bill including the switching information, and the sending unit (13) is specifically configured for sending the telephone bill to the post-paid charging module (43).

9. A charging system, comprising:
a pre-paid charging module (42), configured for switching between charging modes in accordance with a charging switching rule when a service is in progress, recording switching information, generating a telephone bill including the switching information, and sending the telephone bill to a post-paid charging module (43); and
the post-paid charging module (43), configured for charging a post-paid charging portion of the service in a post-paid charging mode in accordance with the switching information in the telephone bill.

10. The charging system according to claim 9, further comprising:
a session control module (41), configured for generating a telephone bill including the switching information, and sending the telephone bill to a post-paid charging module (43).
